# EUROPÄISCHE PATENTANMELDUNG

(11) **EP 2 262 078 A1**
(43) Veröffentlichungstag der Anmeldung: **15.12.2010**
(21) Anmeldenummer: 09007662.1
(22) Anmeldetag: 10.06.2009
(51) Int. Cl.: H02J 17/00

(54) **Anordnung und Verfahren zur induktiven Energieübertragung**

(71) Anmelder: Braun GmbH, 61476 Kronberg/Taunus (DE)
(72) Erfinder: Jung, Philipp, 64347 Griesheim (DE); Lepper, Joachim, 61250 Usingen (DE); Langsdorf, Christian, 61440 Oberursel (DE); Herzberg, Lutz Ronald, 60437 Frankfurt/Main (DE); Hohmann, Thomas, 63571 Gelnhausen (DE)

(57) **Zusammenfassung**

Schaltungsanordnung zum induktiven Übertragen von Energie, aufweisend: einen primärseitigen Oszillatorkreis zum Erzeugen und Abstrahlen eines magnetischen Wechselfeldes an eine Sekundärseite, mit zumindest einem Spulenelement und einem Kondensatorelement und einem ersten aktiven Element, über welches dem Oszillatorkreis elektrische Energie zuführbar ist, wobei der Oszillatorkreis ein Schaltungselement aufweist, dessen Wirkwiderstand zur Einstellung der Energiezufuhr veränderbar ist.

## Beschreibung

### Gebiet der Erfindung

Die Erfindung betrifft eine Schaltungsanordnung und ein Verfahren zur induktiven Energieübertragung für ein elektrisches Gerät, beispielsweise für eine elektrische Zahnbürste oder für einen elektrischen Rasierapparat.

### Hintergrund der Erfindung

Elektrische akkubetriebene Geräte, beispielsweise tragbare Kleingeräte wie Zahnbürsten, Rasierapparate oder Telefone, werden üblicherweise an einer Geräte-externen Ladestation aufgeladen. Besonders beliebt sind kontaktlose Ladestationen, bei denen die Energieübertragung von der Ladestation in das Gerät über einen induktiven Übertrager erfolgt. Die zu übertragende Energie wird in der Ladestation durch einen Oszillatorkreis mit Spulenelement und Kondensatorelement gewandelt, wobei das Spulenelement üblicherweise zugleich die Primärspule des induktiven Übertragers zu dem zu ladenden Gerät bildet. Durch die Energieabgabe über das Magnetfeld wird der Oszillatorkreis gedämpft. Als Ausgleich (Entdämpfung) für die induktiv abgegebene Energie wird dem Oszillator elektrische Energie zugeführt, deren Menge über ein aktives Element (z.B. Transistor) eingestellt werden kann. Die Ladestation wird gewöhnlich als Primärseite, das zu ladende Gerät als Sekundärseite bezeichnet.

Moderne Ladestationen kennen üblicherweise drei Betriebsfälle oder -modi. Der erste Fall ist der Lade-Modus, wenn also die Sekundärseite dauerhaft Energie nachfragt. Der zweite Fall ist der einfache Standby-Modus, wenn die Sekundärseite nicht in der Nähe der Primärseite ist, das Gerät nicht an der Ladestation ist, also gar keine Energie nachgefragt wird. Der dritte Fall ist der erweiterte Standby-Modus, wenn sich die Sekundärseite zwar an der Laderstation befindet, aber vollständig geladen ist und nur "gelegentlich" (z.B. zyklisch) Energie zur Erhaltungsladung und Kompensation ihres Eigenverbrauchs benötigt. Aus Gründen der Energieeffizienz (vgl. EU-Direktive 205/32) ist es wünschenswert, die Energieaufnahme der Primärseite entsprechend dem jeweiligen Betriebsfall einzustellen.

Die Energiezufuhr in den Oszillatorkreis und damit die Energieaufnahme der primärseitigen Schaltung kann dadurch eingestellt werden, dass das aktive Element entsprechend gesteuert wird. Ist das aktive Element ein Transistor, so kann die Steuerung durch Einstellung der Basis-Emitter-Spannung bewerkstelligt werden. Allerdings ist die Steuerung des aktiven Elements in dieser Weise verhältnismäßig aufwendig und ist wenig geeignet zur Einstellung mehrer Betriebsmodi.

Der jeweilige Betriebsfall kann über den Leistungsbedarf der Sekundärseite ermittelt werden. Bekannt ist, den Leistungsbedarf der Sekundärseite direkt an der Sekundärseite zu erfassen, eine entsprechende Information an die Primärseite zu übertragen und das aktive Element anzusteuern. Diese Lösung mag sehr präzise funktionieren, ist jedoch bei induktiven Ladestationen verhältnismäßig aufwendig, weil Übertragungsmittel für die Information von der Sekundärseite zur Primärseite bereitgestellt werden müssen.

### Aufgabe der Erfindung

Aufgabe der vorliegenden Erfindung ist es, Schaltungen und Verfahren bereitzustellen, welche die Steuerung der Primärseite im oben aufgeführten Sinne entsprechend der Last der Sekundärseite ohne großen Aufwand ermöglichen.

### Erfindungsgemäße Lösung

Diese Aufgabe wird durch die Schaltungen und Verfahren gemäß den Ansprüchen gelöst.

Erfindungsgemäß bereitgestellt wird eine Schaltungsanordnung zum induktiven Übertragen von Energie, aufweisend: einen primärseitigen Oszillatorkreis zum Erzeugen und Abstrahlen eines magnetischen Wechselfeldes an eine Sekundärseite, mit zumindest einem Spulenelement und einem Kondensatorelement und einem ersten aktiven Element, über welches dem Oszillatorkreis elektrische Energie zuführbar ist, wobei der Oszillatorkreis ein Schaltungselement aufweist, dessen Wirkwiderstand zur Einstellung der Energiezufuhr veränderbar ist.

Über die Änderung des Wirkwiderstands eines Schaltungselements kann eine besonders elegante Steuerung der Energiezufuhr in den Oszillatorkreis bewerkstelligt werden.

Vorteilhafte Weiterbildungen der Erfindung können folgende Merkmale enthalten.

Das Schaltungselement kann ein zweites aktives Element umfassen, durch welches der Wirkwiderstand des Schaltungselements veränderbar ist.

Der Wirkwiderstand kann in Abhängigkeit von einer elektrischen Größe, die vom Oszillatorkreis detektierbar ist, veränderbar sein.

Der Leistungsbedarf der Sekundärseite kann aus einer elektrischen Größe, die im Oszillatorkreis detektierbar ist, ermittelbar sein.

So ändert sich z.B. die Amplitude der Oszillatorschwingung verhältnismäßig stark in Abhängigkeit von der sekundärseitigen Belastung. Diese Änderung ist weitaus deutlicher und damit besser detektierbar als die Änderung des primärseitigen Leistungsbedarfs. Letztere ist, wie eingangs geschildert, ein nur ungenaues Maß für den Leistungsbedarf der Sekundärlast. Die Detektion der Amplitude der Oszillatorschwingung eignet sich daher besonders gut zur Ermittlung des Leistungsbedarfs der Sekundärseite.

Die elektrische Größe kann direkt an dem ersten aktiven Element detektiert werden. Die elektrische Größe kann z.B. die Kollektorspannung oder die Basisspannung des ersten aktiven Elements sein.

Die Schaltungsanordnung kann weiter ein Vergleichsmittel aufweisen, welches zum Steuern des zweiten aktiven Elements in Abhängigkeit von der elektrischen Größe und einer Referenzgröße ausgestaltet ist.

Die Referenzgröße kann einem Mittelwert der elektrischen Größe entsprechen, die elektrische Größe kann ein Spitzenwert sein.

Der Wirkwiderstand kann beim Durchbrechen eines Schwellenwertes durch die elektrische Größe in binärer Weise änderbar sein. Alternativ kann der Wirkwiderstand nach Durchbrechen eines Schwellenwertes durch die elektrische Größe kontinuierlich änderbar sein.

Die Schaltungsanordnung kann ausgestaltet sein zum induktiven Laden eines Energiespeichers, der in einem Kleingerät, insbesondere Zahnbürste, Rasierapparat oder Kommunikationsgerät, angeordnet ist.

Die Erfindung umfasst auch ein Verfahren zum induktiven Übertragen von Energie, bei welchem in einem primärseitigen Oszillatorkreis ein magnetisches Wechselfeld erzeugt und an eine Sekundärseite abgestrahlt wird, wobei dem Oszillatorkreis elektrische Energie zugeführt wird, wobei die Energiezufuhr durch ein Schaltungselement im Oszillatorkreis, dessen Wirkwiderstand zur Einstellung verändert wird, eingestellt wird.

Vorteilhafterweise wird also die Güte des Oszillators als Kriterium für den Energiebedarf der Sekundärseite herangezogen. In die Sekundärseite selbst muss nicht eingegriffen werden. Eine besondere Betriebssituation der Sekundärseite zur Messung des Energiebedarfs wird nicht benötigt. Als Maß für die Güte kann die maximale Amplitude einer Halbschwingung im Oszillatorkreis erfasst und ausgewertet werden. Die maximale Amplitude kann mit einem Referenzwert verglichen werden. Als Maß für die Güte kann auch der Mittelwert einer Halbschwingung verwendet werden.

### Kurzbeschreibung der Figuren

Die Erfindung wird anhand von Ausführungsbeispielen und der Zeichnung näher erläutert. In der Zeichnung zeigt:
Fig. 1 ein Blockschaltbild zum besseren Verständnis der vorliegenden Erfindung;
Fig. 2 eine erste Ausführungsform der Erfindung;
Fig. 3 eine zweite Ausführungsform der Erfindung;
Fig. 4 eine dritte Ausführungsform der Erfindung; und
Fig. 5 eine vierte Ausführungsform der Erfindung.

### Ausführliche Beschreibung der Figuren

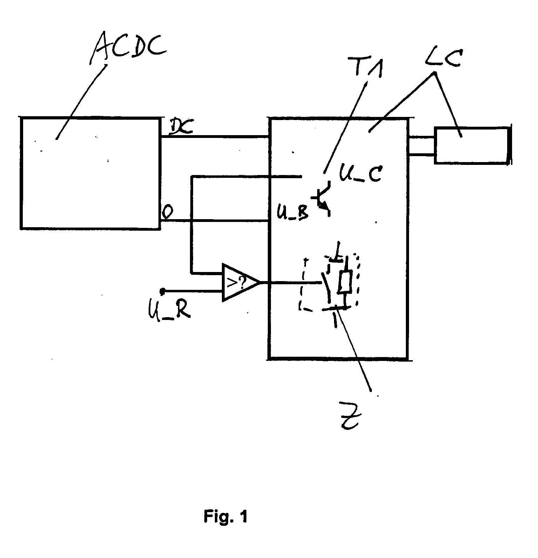

Das Blockschaltbild gemäß Fig. 1 illustriert den prinzipiellen Aufbau einer induktiven Ladestation gemäß der Erfindung. In einem selbstschwingenden Oszillatorkreis LC sind ein Kondensatorelement und eine Spulenelement angeordnet. Der Oszillatorkreis LC dient der Erzeugung eines magnetischen Wechselfeldes. Das Spulenelement des Oszillatorkreises dient zugleich der induktiven Übertragung von Energie aus dem Oszillatorkreis LC an eine (in der Figur nicht dargestellte) Sekundärseite. Der Oszillatorkreis LC bezieht elektrische Energie aus dem Netz über ein Gleichrichterelement ACDC und ein aktives Element T1, welches im Oszillatorkreis LC angeordnet ist. Der Oszillatorkreis umfasst ein Schaltungselement Z, dessen Wirkwiderstand zur Einstellung der Energiezufuhr veränderbar ist.

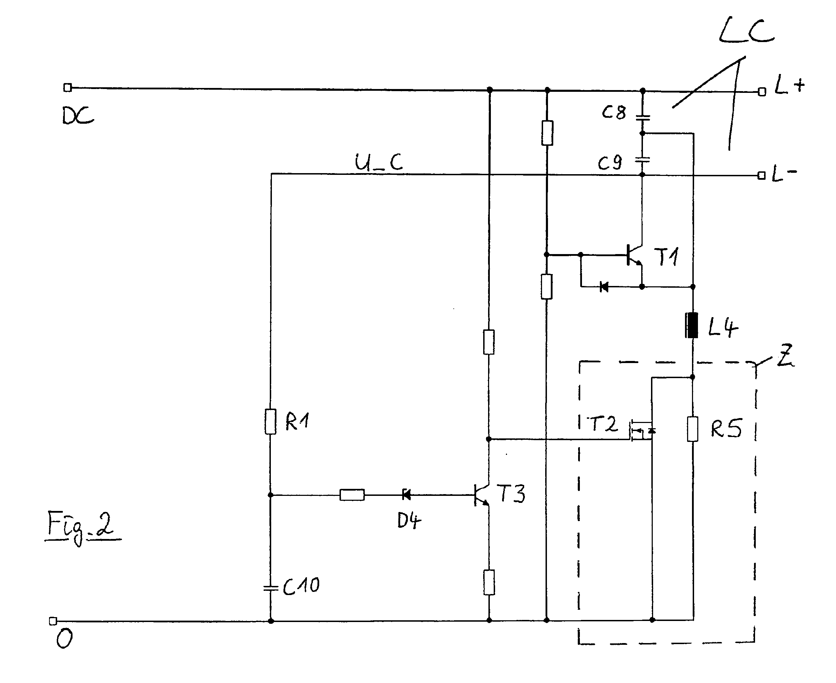

Fig. 2 bis Fig. 5 zeigen Ausführungsbeispiele der Erfindung in detaillierter Form. Das Netz und das Gleichrichterelement ACDC sind in der Figur nicht gezeigt; das Gleichrichterelement ist mit den Anschlüssen DC und 0 verbunden.

Fig. 2 zeigt das erste Ausführungsbeispiel der Erfindung Der Oszillatorkreis umfasst Kondensatoren C8 und C9, eine Spule L4 sowie eine Spule, von der nur die Anschlüsse L1+ und L1- dargestellt sind. Letztere dient zugleich der Abstrahlung des Magnetfeldes. Der Oszillatorkreis LC bildet einen Colpitts-Oszillator. Die in den Oszillatorkreis LC eingespeiste elektrische Energie wird durch ein Schaltungselemtent Z eingestellt, das im Oszillatorkreis in Serie mit den Kondensatoren C8, C9 und der Spule L4 angeordnet ist. Das Schaltungselemtent Z umfasst einen ohmschen Widerstand R5 und als aktives Element einen Feldeffekt-Transistor T2, dessen Drain-Source-Strecke parallel zum Widerstand R5 liegt. Das Schaltungselement Z wird als veränderbarer Emitterwiderstand für das aktive Element T1 betrieben. Durch Verändern des Emitterwiderstands von T1 wird der Stromfluss und damit die Energiezufuhr in den Oszillatorkreis LC eingestellt.

Gesteuert wird der Emitterwiderstand des aktiven Elements T1 durch ein weiteres aktives Element, den Transistor T3, dessen Basis über eine Zener-Diode D4 und einen Sample-and-Hold-Zweig aus R1 und C10 mit dem Kollektor des Transistors T1 verbunden ist. Die Zener-Diode D4 dient als Vergleichselement. Übersteigt das Kollektorpotential U_C an T1 die Summe der Durchbruchsspannung der Zener-Diode D4 und der Basis-Emitter-Spannung von T3, wird die Kollektor-Emitter-Strecke des Transistor T3 durchgeschaltet. Hierdurch wird das Potential am Gate des Feldeffekt-Transistors T2 auf Masse heruntergezogen, so dass der n-Kanal-Feldeffekt-Transistor T2 sperrt. Der ohmsche Widerstand des Schaltungselements Z im Oszillatorkreis wird maximal, nimmt den Wert des Widerstands R5 an. In den Oszillatorkreis LC fließt also nur noch ein kleiner Strom hinein, die Energiezufuhr wird minimal. Wenn dem Oszillatorkreis Energie über das Magnetfeld entnommen wird, wird der Oszillation abklingen. Hierdurch wird das maximale Potential, also die Amplitude der Schwingung am Kollektor wieder sinken, wodurch die Spannung über der Zener-Diode D4 ebenfalls sinkt. Sinkt die Spannung schließlich unter die Summe der Durchbruchsspannung und Basis-Emitter-Spannung von T3, so wird der Transistor T3 gesperrt. Dann nimmt das Potential am Gate von T2 wieder einen hohen Wert an, so dass der Feldeffekt-Transistor T2 durchschaltet. Der ohmsche Widerstand des Schaltungselements Z nimmt seinen Minimalwert an, so dass der Strom durch das Element und somit die Energiezufuhr in den Oszillatorkreis wieder steigt. Der Spannungswandler ACDC wird als dementsprechend höher belastet. Die Schaltung wirkt demnach als geschlossener Regelkreis.

Indem die Energiezufuhr in den Oszillatorkreis LC über eine Veränderung des ohmschen Widerstands des Oszillatorkreises eingestellt wird, lässt sich der Energiezufuhr für die Schaltung in einfacher Weise zuverlässig einstellen. Demgegenüber würde sich eine Veränderung der Werte der Kapazität oder der Induktivität des Oszillatorkreises auf die Schwingfrequenz des Oszillatorkreises auswirken und würde damit zu einer starken Verstimmung des Oszillatorkreises führen. Ein verstimmter Oszillator eignet sich weniger gut für eine Ladestation, die in definierten Modi betrieben werden soll. Gegenüber einer direkten Beeinflussung der Energiezufuhr nur unter Ansteuerung des Transistors T1 bietet die vorliegende Lösung bessere Einstellmöglichkeiten. Es lässt sich entweder ein System mit mehreren Betriebsmodi oder ein System mit genau zwei definierten Betriebsmodi realisieren.

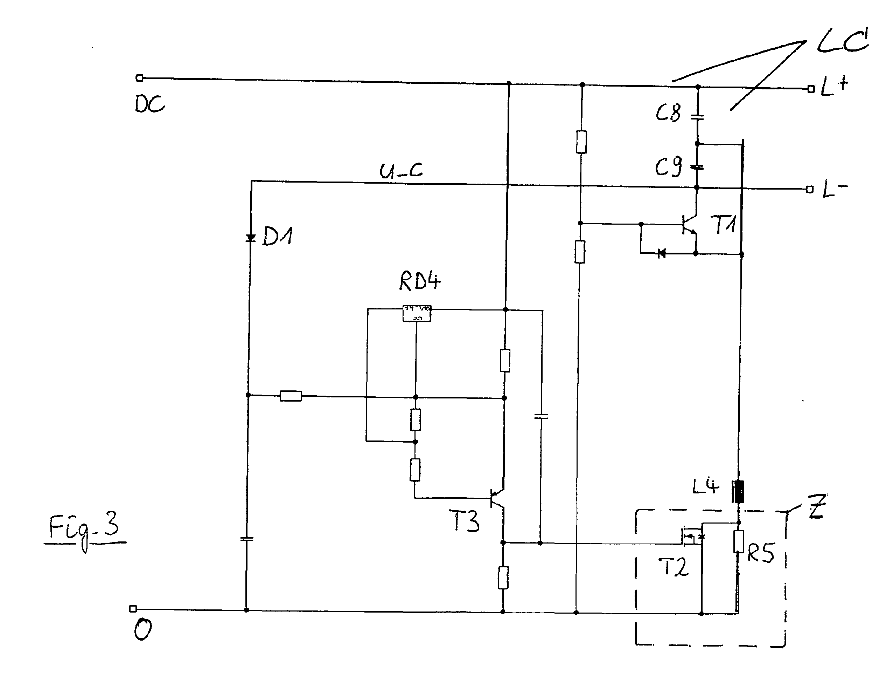

Anstelle einer Zener-Diode kann als Vergleichsmittel eine Referenzdiode RD4 verwendet werden. Fig. 3 zeigt eine derartige zweite Ausführungsform. Das Kollektorpotential von T1 wird über die Diode D1 dem Steueranschluss GND der Referenzdiode RD4 zugeführt. Bleibt das Potential am Steueranschluss GND unterhalb einer (intern eingestellten) Referenzspannung U_R, so ist der Ausgang OUT tief. Der pnp-Transistor T3 wird leitend. Hierdurch wird das Gate des Feldeffekt-Transistors T2 mit VDD verbunden, das Potential also hoch. Der Feldeffekt-Transistor wird leitend, so dass Energie in den Oszillatorkreis fließen kann. Übersteigt das Potential am Steueranschluss GND die (intern eingestellte) Referenzspannung, so wird das Potential am VDD-Anschluss auf den Ausgang OUT durchgeschaltet. Hierdurch wird der Transistor T3 gesperrt. Das Potential am Gate des Feldeffekt-Transistors T2 wird tief, so dass der Feldeffekt-Transistors T2 sperrt. Die Energiezufuhr in den Oszillatorkreis wird minimal.

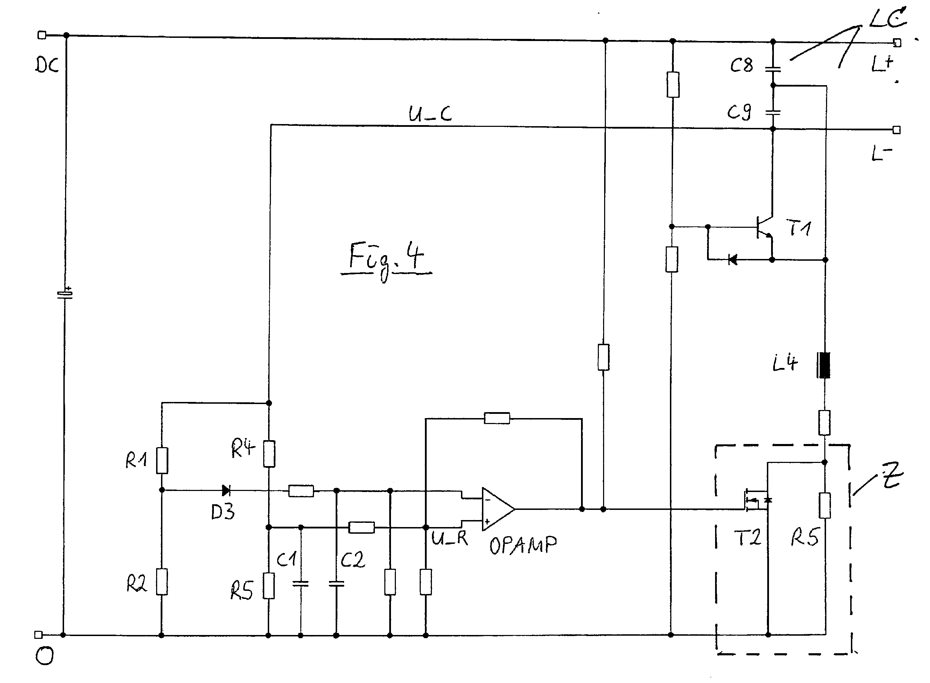

Fig. 4 zeigt eine dritte Ausführungsform der Erfindung. Hier erfolgt die Auswertung des Kollektorpotentials von T1 mittels Operationsverstärkers OPAMP als Vergleichsmittel. Durch die Beschaltung des Operationsverstärkers OPAMP wird ein Vergleich des Spitzenwerts der Kollektorspannung (also der Amplitude) mit einem Mittelwert der Kollektorspannung als Referenzspannung verglichen. Die Referenzspannung wird durch einen Spannungsteiler aus den Widerständen R4 und R5 und Kondensator C1 eingestellt. Der Spitzenwert der Kollektorspannung wird durch dem Spannungsteiler aus den Widerständen R1, R2 und die Diode D3 sowie den Kondensator C2 gebildet. Sinkt der Spitzenwert im Verhältnis zum Mittelwert, was einer stärkeren Dämpfung, also einer größeren Belastung des Oszillatorkreises entspricht, so wird der Emitterwiderstand verringert, so dass wieder elektrische Energie zugeführt werden kann.

Bei den obigen Ausführungsformen ist die positive Amplitude der Oszillatorspannungsschwingung detektiert und ausgewertet worden. Genauso gut kann der negative Anteil der Oszillatorspannungsschwingung ausgewertet werden.

Je nach Verschaltung des aktiven Elements T1 im Oszillatorkreis LC kann anstelle der Kollektorspannung U_C auch die Spannung U_B an seiner Basis zur Lastdetektion ausgewertet werden. Z.B. kann ein Mikrocontroller als Vergleichsmittel verwendet werden. Diesem kann die negative Basisspannung von T1 zugeführt werden. Die Basisspannung kann über eine entsprechend orientierte Gleichrichterdiode herangeführt werden und ist repräsentativ für die Last im Oszillatorkreis. Im Mikrocontroller kann die negative Basisspannung von T1 mit einer Spannungsreferenz verglichen werden, die im Mikrocontroller intern eingestellt wird.

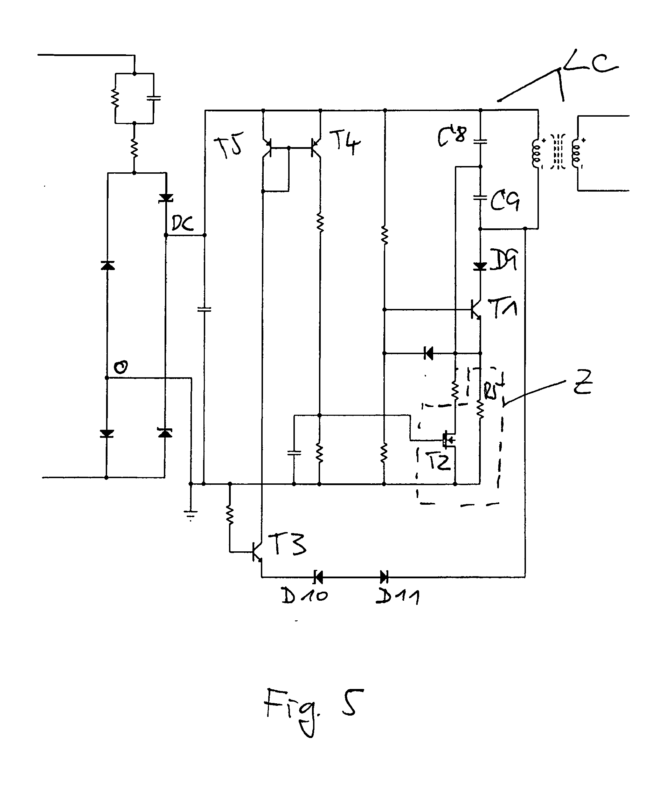

Fig. 5 zeigt eine vierte Ausführungsform der Erfindung. Bei dieser Ausführungsform ist der Oszillatorkreis LC ein Colpitts-Oszillator. Das Vergleichsmittel umfasst eine Zener-Diode D10. Die Schaltung ist ausgestaltet, die negative Spannungsamplitude der Schwingung im Oszillatorkreis LC zu detektieren, und zwar den betragsmäßigen Maximalwert. Der Maximalwert der negativen Spannungsamplitude des Oszillatorkreises LC wird als Maß für die Güte, also für die sekundärseitige Last, herangezogen. Fällt der Maximalwert (im Vergleich zu einem Referenzwert) ab, ist dies ein Zeichen für eine stärkere Dämpfung, also für einen höheren sekundärseitigen Energiebedarf. Wenn andererseits die negative Spannungsamplitude betragsmäßig einen vorbestimmten Wert übersteigt (z.B. maximal ist), also im Fall des unbelasteten Oszillatorkreises LC, wird der Zweig mit Zener-Diode D10 und Diode D11 leitend, und der Transistor T3 schaltet durch. Die Transistoren T4 und T5 können dann ebenfalls durchschalten, wenn deren Basis-Emitter-Spannungen betragsmäßig einen vorbestimmten Wert überschreiten. Die beiden Transistoren T4 und T5 steuern den Feldeffekt-Transistor T2. Wenn T2 durchschaltet, wird der Wirkwiderstand des Schaltungselements Z verhältnismäßig klein, und die Energiezufuhr in dem Oszillatorkreis LC wird maximal.

Die Erfindung umfasst auch eine Schaltungsanordnung zum induktiven Übertragen von Energie, aufweisend einen primärseitigen Oszillatorkreis zum Erzeugen und Abstrahlen eines magnetischen Wechselfeldes an eine Sekundärseite, mit zumindest einem Spulenelement und einem Kondensatorelement und einem ersten aktiven Element, über welches der Oszillatorkreis mit elektrischer Energie versorgt werden kann, wobei der Leistungsbedarf der Sekundärseite von einer elektrischen Größe, die im Oszillatorkreis detektierbar ist, ermittelbar ist.

Die Energieversorgung des Oszillatorkreises kann in Abhängigkeit von der elektrischen Größe einstellbar sein.

Eine Diode D9 am Kollektor des Transistors T1 unterbindet einen möglichen Stromrückfluss in Sperrrichtung des Transistors T1, der zu Lasten des Diodenzweigs D10, D11 gehen würde, unterstützt also die Auswertbarkeit der negativen Spannungsamplitude im Oszillatorkreis LC und verbessert die Güte des Oszillatorkreises LC.

Die beschriebenen Ausführungsformen eignen sich besonders gut bei Verwendung von Schaltnetzteilen zur Bereitstellung der Versorgungsspannung DC für die Schaltung, denn diese passen ihre Leistungsaufnahme ihrer Leistungsabgabe besonders gut an. Eine Beschränkung ihrer Leistungsabgabe führt also zu einer Beschränkung der Leistungsaufnahme aus dem Netz.

Die Ausführungsformen sind besonders geeignet zum Einsatz in induktiven Ladestationen für elektrische Kleingeräte wie elektrische Zahnbürsten, Rasierapparate oder Kommunikationsgeräte (portable Telefone).

## Patentansprüche

1. Schaltungsanordnung zum induktiven Übertragen von Energie, aufweisend:
einen primärseitigen Oszillatorkreis (LC) zum Erzeugen und Abstrahlen eines magnetischen Wechselfeldes an eine Sekundärseite, mit zumindest einem Spulenelement und
einem Kondensatorelement und einem ersten aktiven Element (T1), über welches dem Oszillatorkreis (LC) elektrische Energie zuführbar ist,
wobei der Oszillatorkreis (LC) ein Schaltungselement (Z) aufweist, dessen Wirkwiderstand zur Einstellung der Energiezufuhr veränderbar ist.

2. Schaltungsanordnung gemäß einem der vorherigen Ansprüche, wobei das Schaltungselement (Z) ein zweites aktives Element (T2) umfasst, durch welches der Wirkwiderstand (Z) des Schaltungselements (Z) veränderbar ist.

3. Schaltungsanordnung gemäß einem der vorherigen Ansprüche, wobei der Wirkwiderstand des Schaltelements (Z) in Abhängigkeit von einer elektrischen Größe (U_B, U_C), die im Oszillatorkreis (LC) detektierbar ist, veränderbar ist.

4. Schaltungsanordnung gemäß einem der vorherigen Ansprüche, wobei der Leistungsbedarf der Sekundärseite aus einer elektrischen Größe (U_B, U_C), die im Oszillatorkreis (LC) detektierbar ist, ermittelbar ist.

5. Schaltungsanordnung gemäß einem der Ansprüche 2 bis 5, weiter aufweisend: ein Vergleichsmittel (D4, RD4, OPAMP, D10), welches zum Steuern des zweiten aktiven Elements (TZ) in Abhängigkeit von der elektrischen Größe (U_B, U_C) und einer Referenzgröße (U_R) ausgestaltet ist.

6. Schaltungsanordnung gemäß Anspruch 5, wobei die elektrische Energie durch ein Schaltnetzteil bereitgestellt wird.

7. Schaltungsanordnung gemäß Anspruch 5 oder 6, wobei die Referenzgröße (U_R) einem Mittelwert der elektrischen Größe (U_B, U_C) entspricht.

8. Schaltungsanordnung gemäß einem der Ansprüche 3 bis 7, wobei die elektrische Größe (U_B, U_C) ein Spitzenwert ist.

9. Schaltungsanordnung gemäß einem der vorherigen Ansprüche, wobei der Wirkwiderstand (Z) beim Durchbrechen eines vorbestimmten Schwellenwertes durch die elektrische Größe (U_B, U_C) in binärer Weise änderbar ist.

10. Schaltungsanordnung gemäß einem der vorherigen Ansprüche, wobei der Wirkwiderstand (Z) nach Durchbrechen eines Schwellenwertes durch die elektrische Größe (U_B, U_C) kontinuierlich änderbar ist.

11. Schaltungsanordnung gemäß einem der vorherigen Ansprüche, welche ausgestaltet ist zum induktiven Laden eines Energiespeichers, der in einem Kleingerät, insbesondere Zahnbürste, Rasierapparat oder Kommunikationsgerät, angeordnet ist.

12. Verfahren zum induktiven Übertragen von Energie, bei welchem in einem primärseitigen Oszillatorkreis (LC) ein magnetisches Wechselfeld erzeugt und an eine Sekundärseite abgestrahlt wird, wobei dem Oszillatorkreis (LC) elektrische Energie zugeführt wird, wobei die Energiezufuhr durch ein Schaltungselement (Z) im Oszillatorkreis (LC), dessen Wirkwiderstand (R) zur Einstellung verändert wird, eingestellt wird.

13. Verfahren gemäß Anspruch 12, wobei das Schaltungselement (Z) ein zweites aktives Element (T2) umfasst, durch welches der Wirkwiderstand des Schaltungselements (Z) verändert wird.

14. Verfahren gemäß Anspruch 12 oder 13, wobei der Wirkwiderstand (R) in Abhängigkeit von einer elektrischen Größe (U_B, U_C), die vom Oszillatorkreis (LC) detektiert wird, verändert wird.

15. Verfahren gemäß einem der Ansprüche 12 bis 14, wobei der Leistungsbedarf der Sekundärseite aus einer elektrischen Größe (U_B, U_C), die im Oszillatorkreis (LC) detektiert wird, ermittelt wird.
